# EUROPEAN PATENT APPLICATION

(11) **EP 1 061 511 A2**
(43) Date of publication of application: **20.12.2000**
(21) Application number: 00112594.7
(22) Date of filing: 14.06.2000
(51) Int. Cl.: G11B 11/10

(54) **Magnetooptical recording alloy**

(30) Priority: 15.06.1999 JP 16765499; 28.06.1999 JP 18104099; 28.06.1999 JP 18104199; 20.09.1999 JP 26496199; 07.10.1999 JP 28632599
(71) Applicant: SHARP KABUSHIKI KAISHA, Osaka 545 (JP)
(72) Inventor: Michijima, Masashi, Souraku-gun, Kyoto-fu (JP); Kyoho, Masanori, Tenri-shi, Nara-ken (JP); Hayashi, Hidekazu, Tenri-shi, Nara-ken (JP); Komoda, Tomohisa, Naga-gun, Mie-ken (JP); Minakata, Ryoji, 3-15-1, Suzaku, Nara-shi, Nara-ken (JP); Kira, Tohru, Tenri-shi, Nara-ken (JP)
(74) Representative: MÜLLER & HOFFMANN Patentanwälte

(57) **Abstract**

The present invention relates to a magnetic recording medium for magnetic recording, which has perpendicular magnetic anisotropy. Specifically, the present invention allows a rare earth metal amorphous film of a PrTbCo or PrTbFe alloy to be used as a perpendicular magnetic recording medium without deteriorating its corrosion resistivity, and the present invention provides a perpendicular magnetic recording medium which is more stable against thermal fluctuation and can heighten the density as compared with the conventional crystalline magnetic recording medium.

## Description

### TECHNICAL FIELD OF THE INVENTION

The present invention relates to a magnetic recording medium for magnetic recording, which has perpendicular magnetic anisotropy.

### BACKGROUND OF THE INVENTION

Recently, in magnetic recording devices such as a magnetic disc, high-density and high memory capacity are strongly required. Accompanying with improvement in their memory capacity, recording bits become finer, and consequently, in size, they become equivalent to crystal grains which constitute a thin film magnetic recording medium. Therefore, it is required that magnetic separation between crystal grains is promoted so that each of the magnetic grains can behave like a single magnetic domain. In addition, since decrease in the number of crystal grains per bit enhances noise, the grain size should be diminished when the recording density is improved. However, when the grain size is too fine, unstableness of the magnetization would be caused by thermal fluctuation.

Examination results on thermal stability of recording magnetization by computer simulation based on the micromagnetics model have been reported ("*Monte Carlo Simulation of Thermal Fluctuation in Perpendicular Recording Media and Longitudinal Recording Media*", Yasutaro Uesaka et al., Shingaku Giho, MR96-37 1996-11).

The above report describes that in either recording systems, in-plane magnetic recording or perpendicular magnetic recording, the reduction of recording magnetization occurs when an index for thermal stability, KuV/kT, becomes 100 or less, wherein Ku is a magnetic anisotropy energy, V is an activation volume which is a unit wherein a magnetization inverses, K is the Boltzman constant, and T is the absolute temperature. Therefore, it is predicted that a perpendicular magnetic recording medium is more advantageous against the deterioration of recording magnetization by thermal fluctuation because they permit a thicker medium film.

On the basis of the above results, examination results in properties of recording density, medium noise and the like for perpendicular magnetic recording media of CoCrPt and CoCrPtTa alloys have been reported ("*High-density Magnetic Recording by Use of MR Head and Single-layer Perpendicular Medium*", Masaaki Nimoto et al., Nihon Oyojiki Gakkai-shi Vol. 21 No.6, pp.950-958 1997), the value of KuV/kT at 30 - 40 Gb/in² of recording density is about 40 for the in-plane magnetic recording medium, while the value for the perpendicular magnetic recording medium increased to about 130.

However, when the critical value of 100 is considered, further improvement Is required. In addition, in the calculation of the KuV/kT value, the Ku value is determined by an experiment using single-crystal magnetic thin film, while the value of the activation volume V is a value estimated from the crystal grain size and the thickness of the medium, therefore, it is not considered that reliability of the KuV/kT value is sufficient. Moreover, as far as crystalline materials are used, it is essentially difficult to avoid the problem that the diminution of the crystal grain size for reducing medium noise enhances the effect of thermal fluctuation in both the in-plane magnetic recording medium and the perpendicular magnetic recording medium.

Thus, in consideration of the above situation, the object of the present invention is to provide a magnetic recording medium, in which the effect of thermal fluctuation is small, and which allows to surpass the limit of the recording density of conventional magnetic recording media.

The present inventors directed their attention to amorphous perpendicular magnetic recording medium in order to solve the above mentioned problems. Since no crystal grains exist in amorphous materials, the activation volume V is independent from grain size and, consequently, the perpendicular magnetic recording medium is possible to have a large activation volume V. Therefore, it is predicted that properties of the amorphous medium are not so affected by thermal fluctuation as those of the crystalline magnetic recording medium.

As an amorphous perpendicular magnetic recording medium, a magneto-optic recording medium is well known. However, in the magneto-optic recording medium, alloys comprising a heavy rare earth metal and a 3d transition metal are used and, in order to conserve a record at room temperature, the compensation temperature is adjusted to near room temperature to diverge the coercive force Hc at room temperature. That is, at room temperature, since magnetic moments of the heavy rare earth metal and the 3d transition metal are cancelled each other, the saturation magnetization Ms is so small. Therefore, the above alloy can not be used as a magnetic recording medium in which recording and reproducing are made by a magnetic head because the magnetic recording medium in which recording and reproducing are made by a magnetic head should have a high saturation magnetization and a certain coercive force at room temperature.

On the other hand, in alloys comprising a light rare earth metal and a 3d transition metal, a large saturation magnetization is obtained because the magnetic moments bind parallel to each other. As one example, a Nd₁₅Co₈₅ amorphous alloy film is described in Example of JP-A 1993/54358. Although it is reported that the medium noise is reduced by using the above alloy thin film, there is no description on the effect of thermal fluctuation. Additionally, the type of medium is not clarified in the specification, but it is supposed to be an in-plane magnetic recording medium from the description of the cause of the medium noise and the above alloy composition.

Additionally, as an amorphous perpendicular magnetic recording medium which is an alloy comprising a light rare earth metal and a 3d transition metal, PrCo is exemplified ("*Magnetization, Currie Temperature and Perpendicular Magnetic Anisotropy of Evaporated Co-Rare Earth Amorphous Alloy Films*, M. Takahashi et al., *J.* *Magnetizm and Magnetic Materials* Vol.1 75, pp.252-262 1988). However, when a magnetic recording medium for the above PrCo was actually made and its properties were measured, it was found that the coercive force Hc was so small (about 200 Oe) in the whole range of the composition ratio where the alloy appeared amorphous and exhibited perpendicular magnetic anisotropy and, therefore, it could not be used as a magnetic recording medium.

In view of the above situation, we made a further examination to find the method of increasing the coercive force Hc without deteriorating any other properties.

In addition, a magnetic recording medium is usually provided with a protective film in order to protect a magnetic layer from friction by a magnetic head. As the above protective layer, carbon system films formed by DC sputtering are most commonly used. Alternatively, a carbon protective film (C protective film) hydrogenated in order to improve the endurance and a film formed by a RF sputtering method or by a CVD method using a gaseous hydrocarbon are known.

One technique for realizing high-density magnetic recording is to reduce the distance between the magnetic film of the magnetic recording medium and the magnetic head. It is considered that the most useful mean for reducing the distance between the magnetic film of the magnetic recording medium is to thin the protective film.

However, when the thickness of the protective film is too thin, fine uneven surface of the magnetic recording medium can not be completely covered, and the magnetic layer appears on the surface of the magnetic recording medium. Then, the magnetic layer is partly oxidized, in turn, magnetic properties or smoothness deteriorates to cause a crash between the head and the disk.

Specially, when a rare earth-transition metal amorphous film is used as a magnetic recording medium, it is very difficult to reduce the thickness of the protective film while maintaining its corrosion resistance because rare earth metals are very easy to be oxidized.

The object of the present invention is to provide a perpendicular magnetic recording medium which is more stable against thermal fluctuation and can heighten the density as compared with the conventional crystalline magnetic recording medium by allowing a rare earth metal amorphous film to be used as a perpendicular magnetic recording medium without deteriorating its corrosion resistivity.

In view of the above situation, we made an examination to find that by inserting a perpendicular magnetic layer between an amorphous alloy film and a C protective layer, the thickness of the C film can be reduced without deteriorating the corrosion resistivity.

### SUMMARY OF THE INVENTION

According to the present invention, a magnetic recording medium, in which the effect of thermal fluctuation is small, and which has a high recording density, a high saturation magnetization, a high coercive force, and high perpendicular magnetic anisotropy can be provided.

That is, the first aspect of the present invention is a magnetic recording medium comprising at least a magnetic recording layer formed on a substrate, wherein the magnetic recording layer has perpendicular magnetic anisotropy and comprises an amorphous alloy metal comprising a light rare earth metal, a heavy rare earth metal and a 3d transition metal.

Further, the present invention is characterized in that the above magnetic recording layer comprises a PrTbCo alloy.

Still further, the present invention is characterized in that the composition of the PrTbCo alloy satisfies the following formula:

(Pr₍₁₀₀₋ₓ₎Tbₓ)_{(100-y)}Co_{y}

40 ≤ x ≤ 80; 77 ≤ y ≤ 85.

That is, the present invention is a magnetic recording medium comprising at least a magnetic recording layer formed on a substrate, wherein the magnetic recording layer has perpendicular magnetic anisotropy and comprises an amorphous PrTbFe alloy.

Further, the present invention is characterized in that the composition of the PrTbFe alloy satisfies the following formula:

(Pr₍₁₀₀₋ₓ₎Tbₓ)_{(100-y)}Fe_{y}

50 ≤ x ≤ 80; 70 ≤ y ≤ 90.

That is, the present invention is a magnetic recording medium comprising at least a magnetic recording layer formed on a substrate, wherein the magnetic recording layer has perpendicular magnetic anisotropy and comprises an amorphous PrTbFeCo alloy.

Further, the present invention is characterized in that a soft magnetic layer is formed between the substrate and the magnetic recording layer.

In addition, according to the present invention, a rare earth metal amorphous film may be used as a perpendicular magnetic recording medium without deteriorating its corrosion resistivity, to provide a perpendicular magnetic recording medium which is more stable against thermal fluctuation and can heighten the density as compared with the conventional crystalline magnetic recording system.

That is, the second aspect of the present invention is a magnetic recording medium comprising a magnetic layer and a protective layer laminated in order on a substrate, wherein the magnetic layer comprises a first magnetic layer and a second magnetic layer from the substrate side, and wherein the first magnetic layer has perpendicular magnetic anisotropy, and is an amorphous alloy comprising a light rare earth metal, a heavy rare earth metal and a 3d transition metal.

Further, the second aspect of the present invention is a magnetic recording medium, in which the second magnetic layer is a perpendicular magnetization film comprising Co or Fe.

### BRIEF DESCRIPTION OF THE DRAWINGS

Figure 1 is a cross-sectional view of the magnetic recording medium according to the first aspect of the present invention.
Figure 2 is a view showing the change in Hf when the relative ratio of Pr and Tb in the PrTbCo alloy film is varied.
Figure 3 is a view showing the change in Ms when the relative ratio of Pr and Tb in the PrTbCo alloy film is varied.
Figure 4 is a view showing the change in Hc when the relative ratio of Pr and Tb in the PrTbCo alloy film is varied.
Figure 5 is a view showing the changes in Ku and K⊥ when the relative ratio of Pr and Tb in the PrTbCo alloy film is varied.
Figure 6 is a view showing the change in Hf when the ratio of the rare earth metals and Co in the PrTbCo alloy film is varied.
Figure 7 is a view showing the change in Ms when the ratio of the rare earth metals and Co in the PrTbCo alloy film is varied.
Figure 8 is a view showing the change in Hc when the ratio of the rare earth metals and Co in the PrTbCo alloy film is varied.
Figure 9 is a view showing the changes in Ku and K⊥ as the ratio of the rare earth metals and Co in the PrTbCo alloy film is varied.
Figure 10 is a view showing the change in Hf when the relative ratio of Pr and Tb in the PrTbFe alloy film is varied.
Figure 11 is a view showing the change in Ms when the relative ratio of Pr and Tb in the PrTbFe alloy film is varied.
Figure 12 is a view showing the change in Hc when the relative ratio of Pr and Tb in the PrTbFe alloy film is varied.
Figure 13 is a view showing the changes in Ku and K⊥ when the relative ratio of Pr and Tb in the PrTbFe alloy film is varied.
Figure 14 is a view showing the change in Hf when the ratio of the rare earth metals and Fe in the PrTbFe alloy film is varied.
Figure 15 is a view showing the change in Ms when the ratio of the rare earth metals and Fe In the PrTbFe alloy film is varied.
Figure 16 is a view showing the change in Hc when the ratio of the rare earth metals and Fe in the PrTbFe alloy film is varied.
Figure 17 is a view showing the changes in Ku and K⊥ as the ratio of the rare earth metals and Fe in the PrTbFe alloy film is varied.
Figure 18 is a view showing the change in Hf when the relative ratio of Fe composition in the TM elements of the PrTbFeCo alloy film is varied.
Figure 19 is a view showing the change in Ms when the relative ratio of Fe composition in the TM elements of the PrTbFeCo alloy film is varied.
Figure 20 is a view showing the change in Hc when the relative ratio of Fe composition in the TM elements of the PrTbFeCo alloy film is varied.
Figure 21 is a view showing the changes in Ku and K⊥ when the relative ratio of Fe composition in the TM elements of the PrTbFeCo alloy film is varied.
Figure 22 is a cross-sectional view of the magnetic recording medium according to the second mode of the present invention.

### DETAILED DESCRIPTION OF THE PREFERRED EMBODIMENTS

The present invention will be explained in details in the Examples below.

### Example 1

In this Example, Pr was used as a light rare earth metal, Tb was used as a heavy rare earth metal, and Co was used as a 3d transition metal.

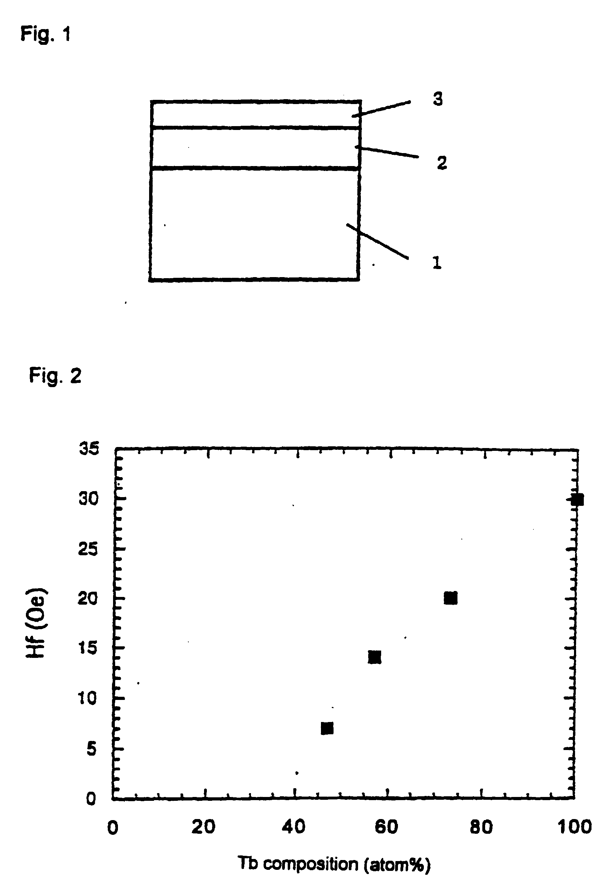

Figure 1 shows the constitution of the magnetic recording medium according to the first aspect of the present invention. As shown in Fig. 1, the magnetic recording medium is made by laminating a magnetic recording layer 2 and an anti-oxidizing layer 3 in order on a substrate 1. A glass substrate (manufactured by Corning: #7059) was used as a substrate 1 and, after evacuation to below 0.4 Torr, a PrTbCo alloy film as a magnetic recording layer 2 and a Ta film as an anti-oxidizing layer 3, were formed in order in the same vacuum. In this case, a composite target where a Pr pellet and a Tb pellet were disposed on a Co target was used to form the PrTbCo alloy film as a magnetic recording layer 2. The PrTbCo alloy film and the Ta film were made by a DC magnetron sputtering method under the following conditions: Ar gas pressure = 5 mTorr; Power = 620 mW/cm² for the PrTbCo film and Power = 86 mW/cm² for the Ta film. The film thickness was set at 500 Å and 100 Å, respectively. Additionally, the substrate 1 was cooled with water to form the films.

Since the PrTbCo alloy film obtained by the above procedure is amorphous, it is impossible to assess the activation volume V by using a crystal grain size as a conventional method in order to determine the index KuV/kT for thermal stability. Therefore, the thermal stability was assessed by using a fluctuation field Hf calculated from the dependency of the remanence coercive force on time for applying the magnetic field. This is described in "*Magnetic Viscosity and Noise Properties for CoCrTa and CoCrPt Thin Film Media*, Kazusuke Yamanaka et al., Shingaku Gihou MR95-13 1995-06". In contrast with the case of the thermal stability index KuV/kT, it is considered that the lower fluctuation field Hf shows the better thermal stability. According to this method, it is advantageous that Hf can be determined directly by measurement of macromagnetic properties without measuring micro properties such as a crystal grain size.

First, a case is explained, where the Co composition ratio in the PrCo alloy is fixed at 83 atom%, and Pr is gradually substituted with Tb.

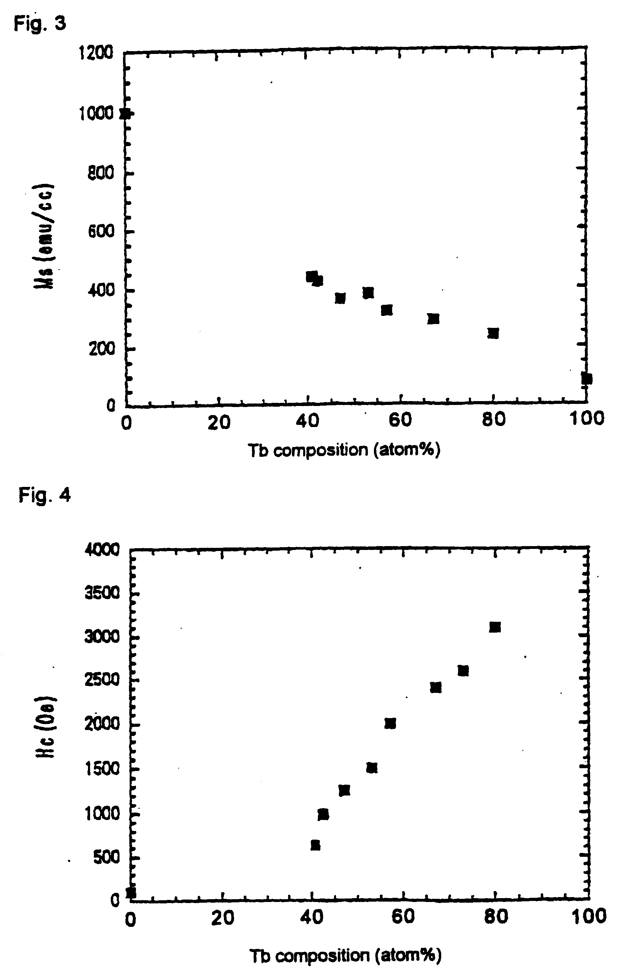

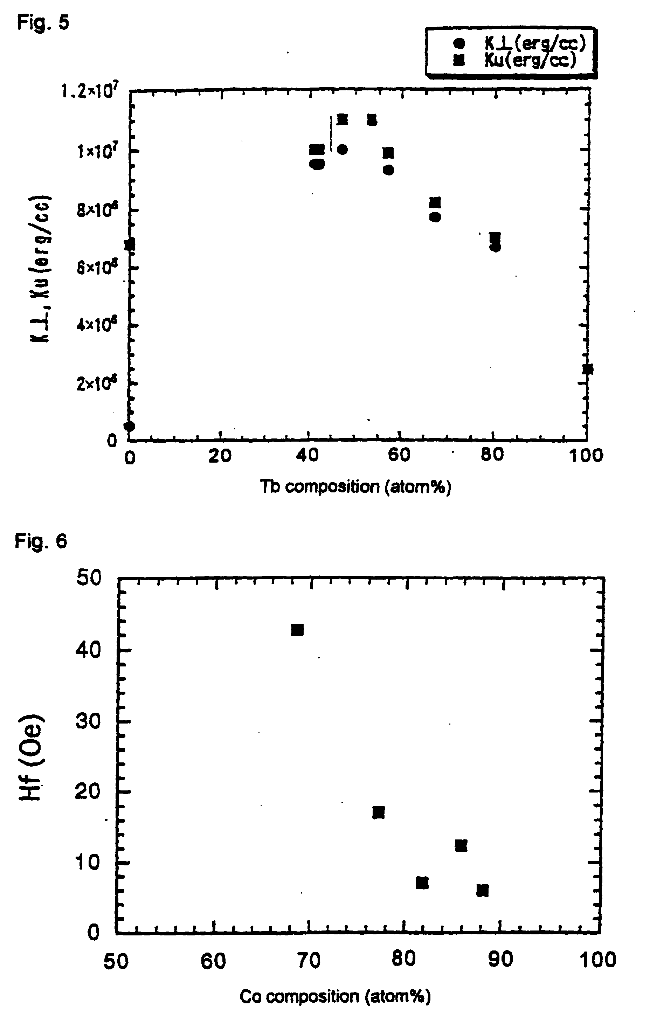

Figure 2 shows the change in the fluctuation field Hf, Figure 3 does the change in the saturation magnetization Ms, and Figure 4 does the change in the coercive force Hc. In addition, Figure 5 shows the change in the perpendicular magnetic anisotropy energy K⊥ and the change in Ku (= K⊥ + 2πMs²; demagnetization energy). Here, the Tb composition ratio is expressed as a proportion of the Tb composition in the rare earth elements.

In the change in the fluctuation field Hf in Fig. 2, a similar measurement was carried out on a conventional crystalline medium Co₇₆Cr₁₆Ta₃Pt₅ to obtain the value Hf = 19 Oe for comparison. From Fig. 2, it can be seen that when the Tb composition ratio is 70 atom% or less, the present alloy medium exhibits better thermal stability than the conventional medium does.

In addition, it can be seen from Figs. 3 and 4 that as substituting Pr with Tb, the saturation magnetization Ms decreases, while the coercive force Hc increases. Moreover, as described in Fig. 5, the values K⊥ are positive in any obtained media. Thus, the media formed above can be used as a perpendicular magnetic recording medium.

On the basis of the above measurement results, the value of KuV/kT was calculated as in the case of the conventional crystalline medium. For example, the value of KuV/kT for the (Pr₅₃Tb₄₇)₁₇Co₈₃ film was obtained by using the activation volume V (= kT/HfMs) calculated from the measured values for the fluctuation field Hf (see Fig. 2) and the saturation magnetization Ms (see Fig. 3), and the magnetic anisotropy energy Ku (see Fig. 5). The obtained value was greater than 4000, which was very high. This demonstrates that the present medium was very excellent in thermal stability.

In magnetic recording media, information is recorded by applying an external magnetic field with a magnetic head, and the information is reproduced by detecting the magnetic field generated from the residual magnetization with the magnetic head. Therefore, a preferred magnetic recording medium has a saturation magnetization Ms of about 200 emu/cc or higher, and a coercive force Hc of about 500 Oe or higher. From Figs. 3 and 4, this requirement is satisfied when the Tb composition ratio is within a range from about 40 to 80 atom%. Further, it is more preferred that a magnetic recording medium has a saturation magnetization Ms of about 300 emu/cc or higher, and a coercive force Hc of about 1000 Oe or higher since a high recording density can be obtained. Similarly, this requirement is satisfied when the Tb composition ratio is within a range from about 41 to 65 atom%.

When the Tb composition ratio is too low, the coercive force Hc decreases and, consequently, it becomes impossible to form a sufficiently small magnetization inversion region. On the other hand, when the Tb composition ratio is too high, the saturation magnetization Mc decreases and, consequently, especially when the recording density becomes high, a sufficient reproduction output can not be obtained.

Additionally, it is clear from Fig. 5 that both Ku and K⊥ are sufficiently high for a perpendicular magnetic recording medium in the above range. Particularly when the Tb composition ratio is within the range from about 40 to 60 atom%, the perpendicular magnetic anisotropy was greater than 1 x 10⁷ erg/cc, which is a very high value.

Further, the magnetization curve for the (Pr₅₃Tb₄₇)₁₇Co₈₃ alloy film was determined, and the rectangular ratio, which is a ratio of a residual magnetization Mr to Ms, was almost 1. Therefore, the residual magnetization is high even in a high-density recording, high reproduction output can be obtained.

Next, another case is explained, where the composition ratio is fixed constant at Pr = 40 atom% and Tb = 60 atom% in the rare earth elements, and the ratio of the rare earth elements and Co is gradually varied.

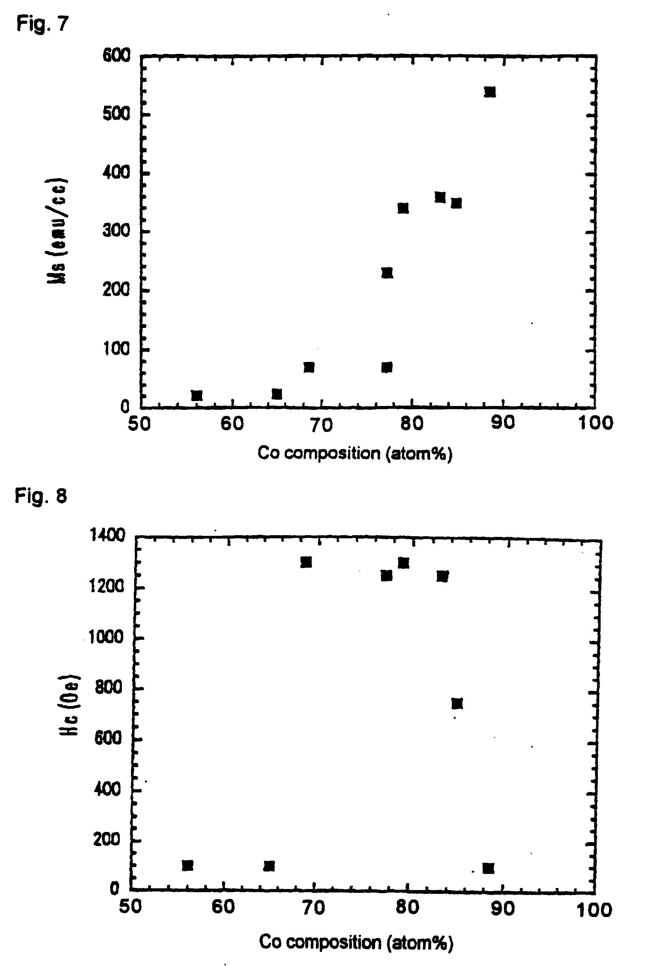

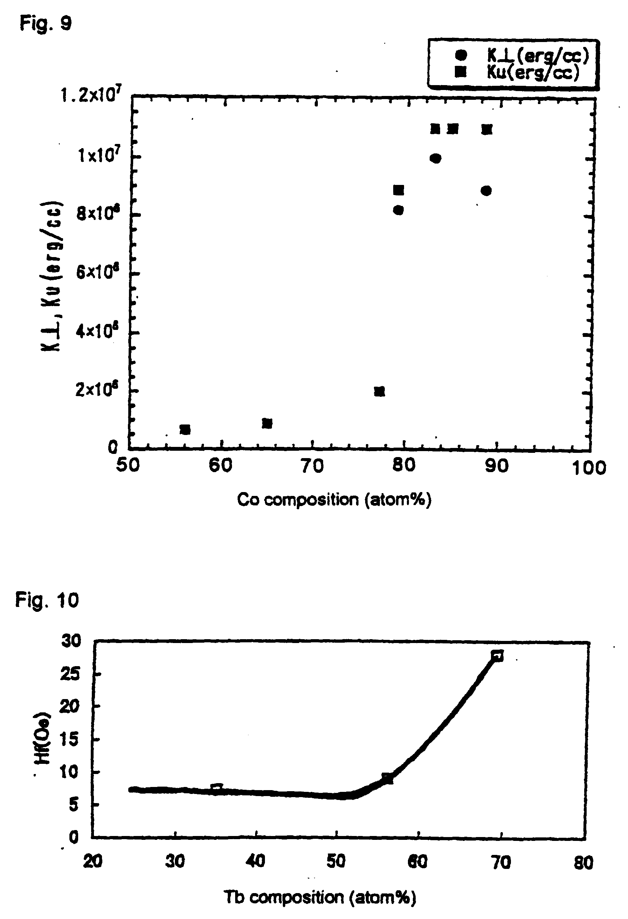

Figure 6 shows the change in the fluctuation field Hf, Figure 7 does the change in the saturation magnetization Ms, and Figure 8 does the change in the coercive force Hc. In addition, Figure 9 shows the change in the perpendicular magnetic anisotropy energy K⊥ and the change in Ku (= K⊥ + 2πMs²; demagnetization energy).

In the change in the fluctuation field Hf in Fig. 6, from the comparison with the fluctuation field Hf of the conventional crystalline medium Co₇₆Cr₁₆Ta₃Pt₅ (Hf = 19 Oe), it can be seen that when the Tb composition ratio is 77 atom% or higher, the present alloy medium exhibits better thermal stability than the conventional medium does.

In addition, it can be seen from Figs. 7 and 8 that as the ratio of Co to the rare earth elements is increased, the saturation magnetization Ms monotonously increases, while the coercive force Hc increases once, then decreases. Moreover, as described in Fig. 9, the values K⊥ are positive in any obtained media. Thus, the present medium can be used as a perpendicular magnetic recording medium.

In magnetic recording media, information is recorded by applying an external magnetic field with a magnetic head, and the information is reproduced by detecting the magnetic field generated from the residual magnetization with the magnetic head. Therefore, a preferred magnetic recording medium has a saturation magnetization Ms of about 200 emu/cc or higher, and a coercive force Hc of about 500 Oe or higher. From Figs. 7 and 8, this requirement is satisfied when the Co composition ratio is within a range from 77 to 85 atom%. Further, it is more preferred that a magnetic recording medium has a saturation magnetization Ms of about 300 emu/cc or higher, and a coercive force Hc of about 1000 Oe or higher since a high recording density can be obtained. Similarly, this requirement is satisfied when the Co composition ratio is within a range from 79 to 83 atom%.

When the Co composition ratio is higher than the above range, the coercive force Hc decreases and, consequently, it becomes impossible to form a sufficiently small magnetization inversion region. On the other hand, when the Co composition ratio is lower than the above range, the saturation magnetization Ms decreases and, consequently, especially when the recording density becomes high, a sufficient reproduction output can not be obtained.

Additionally, it is clear from Fig. 9 that both Ku and K⊥ are sufficiently high for a perpendicular magnetic recording medium in the above range.

### Example 2

In this Example, Ce was used as a light rare earth metal, Tb was used as a heavy rare earth metal, and Co was used as a 3d transition metal.

In this case, a composite target where a Tb pellet and a Ce pellet were disposed on a Co target was used to form the CeTbCo alloy film as a magnetic recording layer of this Example, wherein the composition was Ce_{6.5}Tb_{7.2}Co_{86.3}. Additionally, the magnetic recording layer of the present invention is not limited to the composition in this Example.

Since other conditions such as the construction of the magnetic recording medium and the layer formation conditions were similar to those of Example 1, details are omitted.

Next, for the CeTbCo alloy film, the saturation magnetization Ms, the coercive force Hc, the perpendicular magnetic anisotropy energy K⊥, the rectangular ratio Mr/Ms, and the fluctuation field Hf are shown in Table 1. Additionally, for comparison, the properties for the (Pr₅₃Tb₄₇)₁₇Co₈₃ alloy film are also shown in the table.

**Table 1**

| Sample | Ms (emu/cc) | Hc (Oe) | K⊥ (erg/cc) | Mr/Ms | Hf (Oe) |
|---|---|---|---|---|---|
| CeTbCo | 220 | 1000 | 6.00E+06 | 1.00 | 9.4 |
| PrTbCo | 350 | 1300 | 1.00E+07 | 1.00 | 9.5 |

Table 1 shows that even when the light rare earth metal is changed from Pr to Ce, the requirement is satisfied, wherein the saturation magnetization Ms is about 200 emu/cc or higher and the coercive force Hc is about 500 Oe or higher and, thus, these media can be used as a magnetic recording medium.

In addition, the value of the perpendicular magnetic anisotropy energy K⊥ is positive and, therefore, they can be used as a perpendicular magnetic recording medium.

Further, the rectangular ratio Mr/Ms, which is a ratio of the residual magnetization Ms to the saturation magnetization Ms, was almost 1, and since the residual magnetization is high even in the high-density recording, high reproduction output can be obtained.

Still further, the fluctuation field Hf was 9.4 Oe and was much smaller than that of the conventional crystalline medium Co₇₆Cr₁₆Ta₃Pt₅ film (Hf = 19 Oe), it can be seen that the present medium is more excellent in thermal stability than the conventional crystalline medium.

### Example 3

In this Example, Nd was used as a light rare earth metal, Tb was used as a heavy rare earth metal, and Co was used as a 3d transition metal.

In this case, a composite target where a Tb pellet and a Nd pellet were disposed on a Co target was used to form the NdTbCo alloy film as a magnetic recording layer of this Example, wherein the composition was Nd_{7.2}Tb_{7.8}Co_{85.0}. Additionally, the magnetic recording layer of the present invention is not limited to the composition in this Example.

Since other conditions such as the construction of the magnetic recording medium and the layer formation conditions were similar to those of Example 1, details are omitted.

Next, for the NdTbCo alloy film, the saturation magnetization Ms, the coercive force Hc, the perpendicular magnetic anisotropy energy K⊥, the rectangular ratio Mr/Ms, and the fluctuation field Hf are shown in Table 2. Additionally, for comparison, the properties for the (Pr₅₃Tb₄₇)₁₇Co₈₃ alloy film are also shown in the table.

**Table 2**

| Sample | Ms (emu/cc) | Hc (Oe) | K⊥ (erg/cc) | Mr/Ms | Hf (Oe) |
|---|---|---|---|---|---|
| NbTbCo | 300 | 800 | 9.20E+06 | 1.00 | 6.2 |
| PrTbCo | 350 | 1300 | 1.00E+07 | 1.00 | 9.5 |

Table 2 shows that even when the light rare earth metal is changed from Pr to Nd, the requirement is satisfied, wherein the saturation magnetization Ms is about 200 emu/cc or higher and the coercive force Hc is about 500 Oe or higher and, thus, these media can be used as a magnetic recording medium.

In addition, the value of the perpendicular magnetic anisotropy energy K⊥ is positive and, therefore, they can be used as a perpendicular magnetic recording medium.

Further, the rectangular ratio Mr/Ms, which is a ratio of the residual magnetization Ms to the saturation magnetization Ms, was almost 1, and since the residual magnetization is high even in the high-density recording, high reproduction output can be obtained.

Still further, the fluctuation field Hf was 6.2 Oe and was much smaller than that of the conventional crystalline medium Co₇₆Cr₁₆Ta₃Pt₅ film (Hf = 19 Oe), it can be seen that the present medium is more excellent in thermal stability than the conventional crystalline medium.

### Example 4

In this Example, Sm was used as a light rare earth metal, Tb was used as a heavy rare earth metal, and Co was used as a 3d transition metal.

In this case, a composite target where a Tb pellet and a Sm pellet were disposed on a Co target was used to form the SmTbCo alloy film as a magnetic recording layer of this Example, wherein the composition was Sm_{7.3}Tb_{8.1}Co_{84.6}. Additionally, the magnetic recording layer of the present invention is not limited to the composition in this Example.

Since other conditions such as the construction of the magnetic recording medium and the layer formation conditions were similar to those of Example 1, details are omitted.

Next, for the SmTbCo alloy film, the saturation magnetization Ms, the coercive force Hc, the perpendicular magnetic anisotropy energy K⊥, the rectangular ratio Mr/Ms, and the fluctuation field Hf are shown in Table 3. Additionally, for comparison, the properties for the (Pr₅₃Tb₄₇)₁₇Co₈₃ alloy film are also shown in the table.

**Table 3**

| Sample | Ms (emu/cc) | Hc (Oe) | K⊥ (erg/cc) | Mr/Ms | Hf (Oe) |
|---|---|---|---|---|---|
| SmTbCo | 220 | 1300 | 3.60E+06 | 0.960 | 10.4 |
| PrTbCo | 350 | 1300 | 1.00E+07 | 1.00 | 9.5 |

Table 3 shows that even when the light rare earth metal is changed from Pr to Sm, the requirement is satisfied, wherein the saturation magnetization Ms is about 200 emu/cc or higher and the coercive force Hc is about 500 Oe or higher and, thus, these media can be used as a magnetic recording medium.

In addition, the value of the perpendicular magnetic anisotropy energy K⊥ is positive and, therefore, they can be used as a perpendicular magnetic recording medium.

Further, the rectangular ratio Mr/Ms, which is a ratio of the residual magnetization Ms to the saturation magnetization Ms, was almost 1, and since the residual magnetization is high even in the high-density recording, high reproduction output can be obtained.

Still further, the fluctuation field Hf was 10.4 Oe and was much smaller than that of the conventional crystalline medium Co₇₆Cr₁₆Ta₃Pt₅ film (Hf = 19 Oe), it can be seen that the present medium is more excellent in thermal stability than the conventional crystalline medium.

### Example 5

In this Example, Pr was used as a light rare earth metal, Dy was used as a heavy rare earth metal, and Co was used as a 3d transition metal.

In this case, a composite target where a Dy pellet and a Pr pellet were disposed on a Co target was used to form the PrDyCo alloy film as a magnetic recording layer of this Example, wherein the composition was Pr_{7.0}Dy_{20.3}Co_{72.7}. Additionally, the magnetic recording layer of the present invention is not limited to the composition in this Example.

Since other conditions such as the construction of the magnetic recording medium and the layer formation conditions were similar to those of Example 1, details are omitted.

Next, for the PrDyCo alloy film, the saturation magnetization Ms, the coercive force Hc, the perpendicular magnetic anisotropy energy K⊥, the rectangular ratio Mr/Ms, and the fluctuation field Hf are shown in Table 4. Additionally, for comparison, the properties for the (Pr₅₃Tb₄₇)₁₇Co₈₃ alloy film are also shown in the table.

**Table 4**

| Sample | Ms (emu/cc) | Hc (Oe) | K⊥ (erg/cc) | Mr/Ms | Hf (Oe) |
|---|---|---|---|---|---|
| PrDyCo | 230 | 630 | 6.60E+06 | 0.98 | 11.0 |
| PrTbCo | 350 | 1300 | 1.00E+07 | 1.00 | 9.5 |

Table 4 shows that even when the heavy rare earth metal is changed from Tb to Dy, the requirement is satisfied, wherein the saturation magnetization Ms is about 200 emu/cc or higher and the coercive force Hc is about 500 Oe or higher and, thus, these media can be used as a magnetic recording medium.

In addition, the value of the perpendicular magnetic anisotropy energy K⊥ is positive and, therefore, they can be used as a perpendicular magnetic recording medium.

Further, the rectangular ratio Mr/Ms, which is a ratio of the residual magnetization Ms to the saturation magnetization Ms, was almost 1, and since the residual magnetization is high even in the high-density recording, high reproduction output can be obtained.

Still further, the fluctuation field Hf was 11.0 Oe and was much smaller than that of the conventional crystalline medium Co₇₆Cr₁₆Ta₃Pt₅ film (Hf = 19 Oe), it can be seen that the present medium is more excellent in thermal stability than the conventional crystalline medium.

### Example 6

Figure 1 shows the constitution of the magnetic recording medium according to the first aspect of the present invention. As shown in Fig. 1, the magnetic recording medium is made by a laminating magnetic recording layer 2 and an anti-oxidizing layer 3 in order on a substrate 1. A glass substrate (manufactured by Corning: #7622) was used as a substrate 1 and, after evacuation to below 0.4 Torr, a PrTbFe alloy film as a magnetic recording layer 2 and a Ta film as an anti-oxidizing layer 3, were formed in order in the same vacuum. In this case, a composite target where a Pr pellet and a Tb pellet were disposed on a Co target was used to form the PrTbFe alloy film as a magnetic recording layer 2. The PrTbFe alloy film and the Ta film were made by a DC magnetron sputtering method under the following conditions: Ar gas pressure = 5 mTorr; Power = 620 mW/cm² for the PrTbFe film and Power = 86 mW/cm² for the Ta film. The film thickness was set at 500 Å and 100 Å, respectively. Additionally, the substrate 1 was cooled with water to form the films.

Since the PrTbFe alloy film obtained by the above procedure is amorphous, it is impossible to assess the activation volume V by using a crystal grain size as a conventional method in order to determine the index KuV/kT for thermal stability. Therefore, the thermal stability was assessed by using a fluctuation field Hf calculated from the dependency of the remanence coercive force on time for applying magnetic field. This is described in "*Magnetic Viscosity and Noise Properties for CoCrTa and CoCrPt Thin Film Media*, Kazusuke Yamanaka et al., Shingaku Gihou MR95-13 1995-06". In contrast with the case of the thermal stability index KuV/kT, the lower fluctuation field Hf shows the better thermal stability. According to this method, it is advantageous that Hf can be determined directly by measurement of macromagnetic properties without measuring micro properties such as a crystal grain size.

First, the change in the fluctuation field Hf is shown in Fig. 10 when the composition ratio of Fe to the rare earth metal (RE) elements was fixed at 80 atom%, and the relative ratio of Tb in the RE elements was gradually varied. Additionally, the abscissa axis indicates atom%.

Similar measurement was carried out on a conventional crystalline medium Co₇₆Cr₁₆Ta₃Pt₅ to obtain the value Hf = 19 Oe for comparison. From Fig. 10, it can be seen that when the relative ratio of Tb composition in the RE elements is about 65 atom% or less, the present alloy medium exhibits better thermal stability than the conventional medium does.

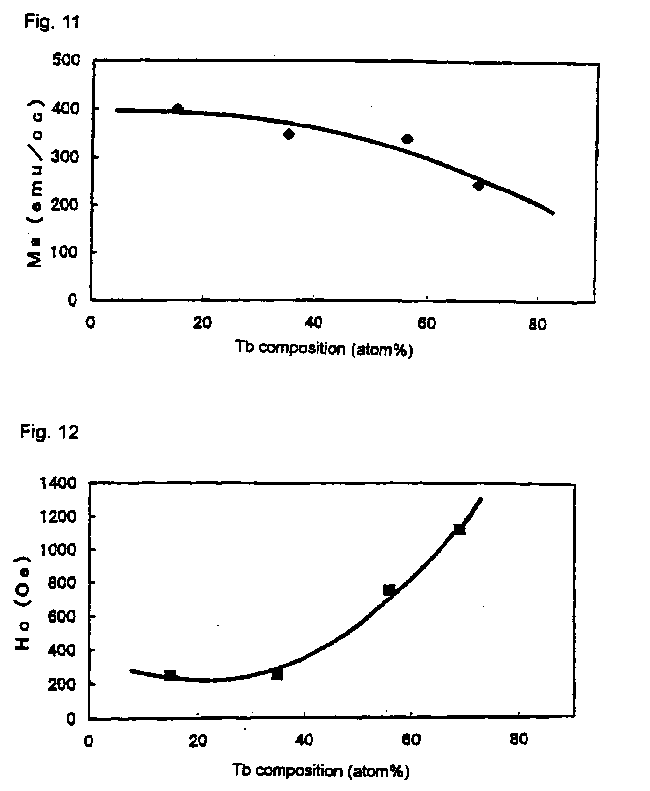

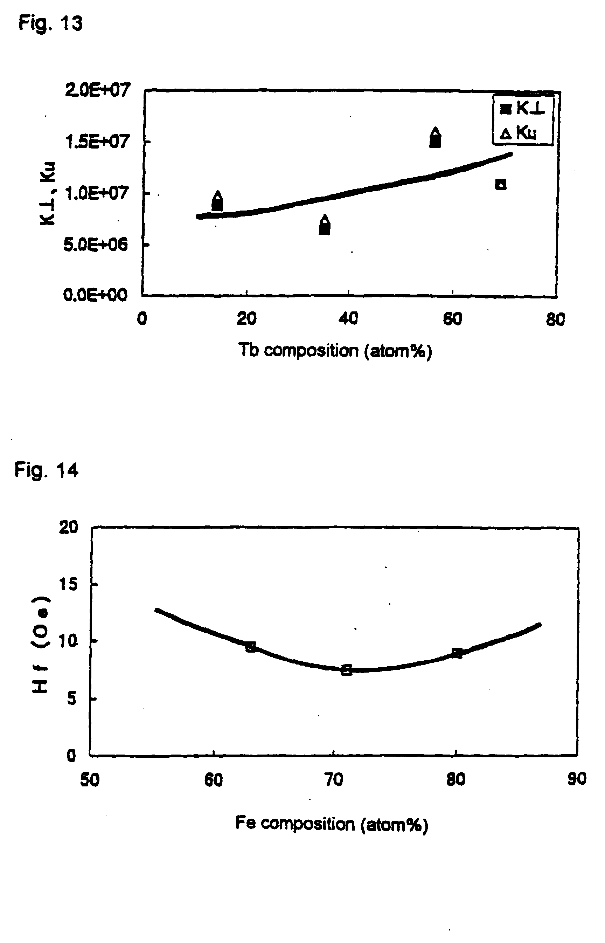

Further, the change in the saturation magnetization Ms and the coercive force Hc are shown in Figs. 11 and 12, respectively, when the composition ratio of Fe to the RE elements was fixed at 80 atom%, and the relative ratio of Tb in the RE elements was gradually varied. In addition, Figure 13 shows the change in the perpendicular magnetic anisotropy energy K⊥ and the change in Ku (= K⊥ + 2πMs²; demagnetization energy).

It can be seen from Figs. 11 and 12 that as the relative ratio of Tb in the RE elements is increased, the saturation magnetization Ms decreases, while the coercive force Hc increases. Moreover, as described in Fig. 13, the values K⊥ are positive in any obtained media. Thus, the present media can be used as a perpendicular magnetic recording medium.

On the basis of the above measurement results, the value of KuV/kT was calculated as in the case of the conventional crystalline medium. For example, the value of KuV/kT for the (Pr₅₃Tb₄₇)₁₇Co₈₃ film was obtained by using the activation volume V (= kT/HfMs) calculated from the measured values for the fluctuation field Hf and the saturation magnetization Ms, and the magnetic anisotropy energy Ku. The obtained value was greater than 4000, which was very high. This demonstrates that the present medium was very excellent in thermal stability.

In magnetic recording media, information is recorded by applying an external magnetic field with a magnetic head, and the information is reproduced by detecting the magnetic field generated from the residual magnetization with the magnetic head. Therefore, a preferred magnetic recording medium has a saturation magnetization Ms of about 200 emu/cc or higher, and a coercive force Hc of about 500 Oe or higher. From Figs. 11 and 12, this requirement is satisfied when the Tb composition ratio is within a range from about 50 to 80 atom%.

When the Tb composition ratio is too low, the coercive force Hc decreases and, consequently, it becomes impossible to form a sufficiently small magnetization inversion region. On the other hand, when the Tb composition ratio is too high, the saturation magnetization Mc decreases and, consequently, especially when the recording density becomes high, a sufficient reproduction output can not be obtained. Additionally, both Ku and K⊥ are sufficiently high for a perpendicular magnetic recording medium in the above range.

Next, the change in the fluctuation field Hf is shown in Fig. 14, when the relative ratio of Tb in the RE elements was fixed at 57 atom% and the composition ratio of Fe to the RE elements was gradually varied. Additionally, the abscissas axis indicates atom%.

In the change in the fluctuation field Hf in Fig. 14, the Hf value was 10 Oe or less at least in the measured range from 63 to 80 atom%, and it is predicted that in a wider range of the Fe composition ratio, the present medium is more excellent in thermal stability than that of the conventional crystalline medium Co₇₆Cr₁₆Ta₃Pt₅ film (Hf = 19 Oe).

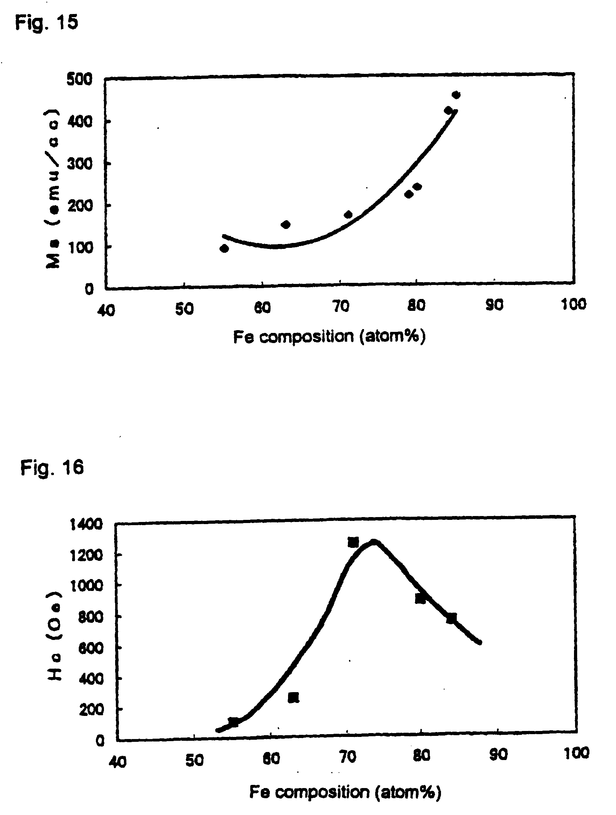

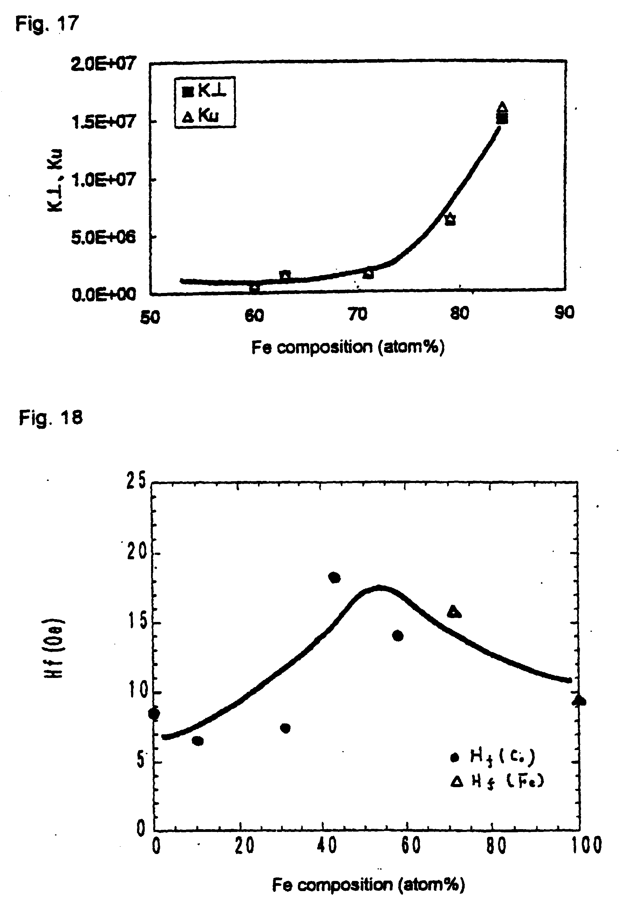

In addition, the changes in the saturation magnetization Ms and the coercive force Mc are shown in Figs. 15 and 16, respectively, when the relative ratio of Tb in the RE elements was fixed at 57 atom% and the composition ratio of Fe to the RE elements was gradually varied. Further, Figure 17 shows the change in the perpendicular magnetic anisotropy energy K⊥ and the change in Ku.

In the Fe composition range from about 70 to 90 atom%, a preferable condition as a magnetic recording medium, where the saturation magnetization Ms is about 200 emu/cc or higher, and the coercive force Hc is about 500 Oe or higher, is satisfied (see Figs. 15 and 16). In the range, both Ku and K⊥ are sufficiently high for a perpendicular magnetic recording medium (see Fig. 17).

Still further, the magnetization curve for the (Pr₆₅Tb₃₅)₂₀Fe₈₀ alloy film was measured, and the rectangular ratio, which is a ratio of a residual magnetization Mr to Ms, was almost 1. Therefore, the residual magnetization is high even in a high-density recording, and high reproduction output can be obtained.

### Example 7

Figure 1 shows the constitution of the magnetic recording medium according to the first aspect of the present invention. As shown in Fig. 1, the magnetic recording medium is made by laminating a magnetic recording layer 2 and an anti-oxidizing layer 3 in order on a substrate 1. A glass substrate (manufactured by Corning: #7622) was used as a substrate 1 and, after evacuation to below 0.4 Torr, a PrTbFeCo alloy film as a magnetic recording layer 2 and a Ta film as an anti-oxidizing layer 3, were formed in order in the same vacuum. In this case, a composite target where a Pr pellet, a Tb pellet and a Fe pellet were disposed on a Co target or a composite target where a Pr pellet, a Tb pellet and a Co pellet were disposed on a Fe target was used to form the PrTbFeCo alloy film as a magnetic recording layer 2. The PrTbFeCo alloy film and the Ta film were made by a DC magnetron sputtering method under the following conditions: Ar gas pressure = 5 mTorr; Power = 620 mW/cm² for the PrTbFeCo film and Power = 86 mW/cm² for the Ta film. The film thickness was set at 500 Å and 100 Å, respectively. Additionally, the substrate 1 was cooled with water to form the films.

Since the PrTbFeCo alloy film obtained by the above procedure is amorphous, it is impossible to assess the activation volume V by using a crystal grain size as a conventional method in order to determine the index KuV/kT for thermal stability. Therefore, the thermal stability was assessed by using a fluctuation field Hf calculated from the dependency of the remanence coercive force on time for applying the magnetic field. This is described in "*Magnetic Viscosity and Noise Properties for CoCrTa and CoCrPt Thin Film Media*, Kazusuke Yamanaka et al., Shingaku Gihou MR95-13 1995-06". In contrast with the case of the thermal stability index KuV/kT, the lower fluctuation field Hf shows the better thermal stability. According to this method, it is advantageous that Hf can be determined directly by measurement of macromagnetic properties without measuring micro properties such as a crystal grain size.

The change in the fluctuation field Hf is shown in Fig. 18 when the composition ratio of the transition metal (TM) elements to the rare earth metal (RE) elements was fixed at 83 atom%, the relative ratio of the Tb in the RE elements was fixed at 83 atom%, and Co in the TM elements was gradually substituted with Fe. Here, the points marked with Hf (Co) represent the values obtained when the film was formed by using the composite target where the Pr, Tb and Fe pellets were disposed on the Co target, while the points marked with Hf (Fe) do the values obtained when the film was formed by using the composite target where the Pr, Tb and Co pellets were disposed on the Fe target. Additionally, the abscissas axis indicates the relative ratio of the Fe composition in the TM elements in atom%.

In the change in the fluctuation field Hf in Fig. 18, similar measurement was carried out on a conventional crystalline medium Co₇₆Cr₁₆Ta₃Pt₅ to obtain the value Hf = 19 Oe for comparison. From Fig. 18, it can be seen that in the whole range of the Fe composition ratio the present alloy medium exhibits better thermal stability than the conventional medium does.

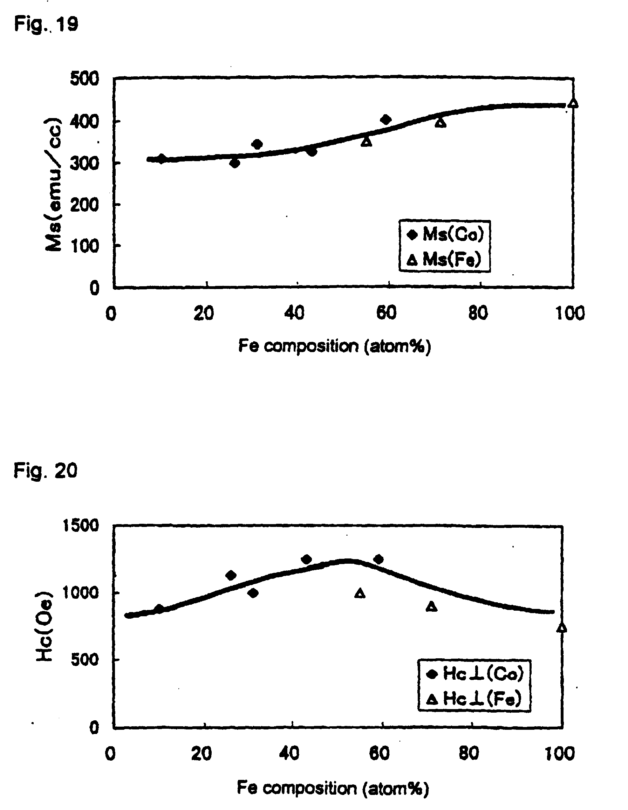

In addition, the changes in the saturation magnetization Ms and the coercive force Hc of the above PrTbFeCo alloy film are shown in Figs. 19 and 20, respectively. Here, the points marked with Ms (Co) and Hc⊥ (Co) represent the values obtained when the film was formed by using the composite target where the Pr, Tb and Fe pellets were disposed on the Co target, while the points marked with Ms (Fe) and Hc⊥ (Fe) do the values obtained when the film was formed by using the composite target where the Pr, Tb and Co pellets were disposed on the Fe target.

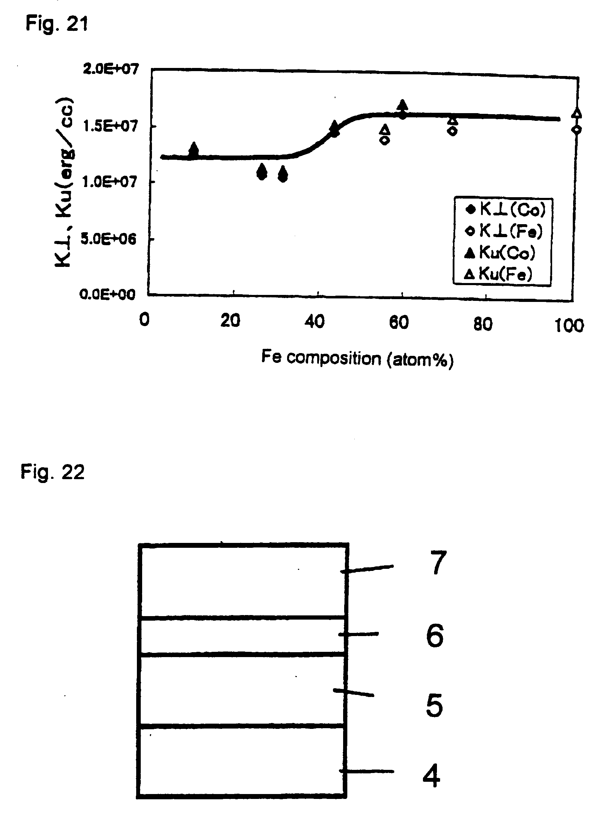

Further, the changes in the perpendicular magnetic anisotropy energy K⊥ and the magnetic anisotropy energy Ku (= K⊥ + 2πMs²; demagnetization energy) are shown in Fig. 21. Here, the points marked with K⊥ (Co) and Ku (Co) represent the values obtained when the film was formed by using the composite target where the Pr, Tb and Fe pellets were disposed on the Co target, while the points marked with K⊥ (Fe) and Ku (Fe) do the values obtained when the film was formed by using the composite target where the Pr, Tb and Co pellets were disposed on the Fe target.

It can be seen from Figs. 19 and 20 that as the relative ratio of Fe composition in the TM elements is increased, the saturation magnetization Ms increases. On the other hand, the coercive force Hc shows a maximum of around 1300 Oe between 40 and 60 atom% of the relative ratio of the Fe composition in the TM elements. Further, it can be seen from Fig. 21 that the perpendicular magnetic anisotropy energy K and the magnetic anisotropy energy Ku saturated to about 1.5 x 10⁷ erg/cc above 40 atom% of the relative ratio of Fe composition in the TM elements. Moreover, the perpendicular anisotropy energy K⊥ is positive in any obtained media. Thus, the present media can be used as a perpendicular magnetic recording medium.

On the basis of the above measurement results, the value of KuV/kT for the (Pr₄₀Tb₆₀)₁₇(Fe₃₂Co₆₈)₈₃ film was obtained by using the activation volume V (= kT/HfMs) calculated from the measured values for the fluctuation field Hf and the saturation magnetization Ms, and the magnetic anisotropy energy Ku, as in the case of the conventional crystalline medium. The obtained value was greater than 4500, which was very high. This demonstrates that the present medium was very excellent in thermal stability.

In magnetic recording media, information is recorded by applying an external magnetic field with a magnetic head, and the information is reproduced by detecting the magnetic field generated from the residual magnetization with the magnetic head. Therefore, a preferred magnetic recording medium has a saturation magnetization Ms of about 200 emu/cc or higher, and a coercive force Hc of about 500 Oe or higher. From Figs. 19 and 20, this requirement is satisfied in the whole range of the Fe composition ratio. Further, both Ku and K⊥ are sufficiently high for a perpendicular magnetic recording medium.

Further, it is more preferred that a magnetic recording medium has a saturation magnetization Ms of about 300 emu/cc or higher, and a coercive force Hc of about 1000 Oe or higher since a high recording density can be obtained. It can be seen from Fig. 20 that the requirement is satisfied when the relative ratio of the Fe composition is within the range from about 20 to 75 atom%. Further, Fig. 19 shows that the saturation magnetization Ms is 30 emu/cc or higher in the whole range of the Fe composition ratio. Therefore, a sufficient reproduction output can be obtained.

On the other hand, the coercive force Hc did not satisfy the requirement where the value is 1000 Oe or higher when the relative ratio of the Fe composition is not within the range from about 20 to 75 atom% and, therefore, it is difficult to form sufficiently small magnetization inversion region. In addition, both the magnetic anisotropy energy Ku and the perpendicular magnetic anisotropy energy K⊥ are sufficiently high for a perpendicular magnetic recording medium

Still further, the magnetization curve for the (Pr₄₀Tb₆₀)₁₇(Fe₃₂Co₆₈)₆₃ film was determined, and the rectangular ratio, which is a ratio of a residual magnetization Mr to Ms, was almost 1. Therefore, the residual magnetization is high even in a high-density recording, and high reproduction output can be obtained.

Further, in the magnetic recording media described in Examples 1 through 7, a soft magnetic layer may be formed between the substrate 1 and the magnetic recording layer 2. In the soft magnetic layer, a Fe film, a Co film, a Ni-Fe alloy film, Fe-Al-Si alloy film, Co-Zr-Nb film and the like may be used.

In the above construction, the magnetic recording layer is put between the magnetic head and the soft magnetic layer, sharper recording can be done in the vertical direction, even when a ring head is used for the recording. In addition, when a single magnetic pole head is used, the soft magnetic layer plays a role as a second magnetic pole. In the case that a single magnetic pole head is used, since magnetic filed leakage in the truck direction is little, a track pitch can be reduced, leading to an improvement in the recording density.

Further, in order to improve corrosion resistivity, elements such as Zr, Hf, V, Nb, Ta, Cr, Mo, Ti, Al, Bi, Ni, Mn, Sb, Ge, Sn and Si may be added to the magnetic recording layer, separately or as a mixture thereof. Additionally, when the added amount is considered, properties of the magnetic recording medium as a perpendicular magnetization film are not deteriorated.

The above embodiments are described by using Pr, Ce, Nd and Sm as a light rare earth metal, Tb and Dy as a heavy rare earth metal, and Co and Fe as a 3d transition metal, but the present invention is not limited to them and, therefore, other heavy rare earth metals than Tb and Dy (Gd, Ho, Er) may be used.

Further, in the above embodiments, a glass substrate was used as a substrate 1, other substrates made of aluminium alloy, ceramics, plastic and the like, or surface-treated substrates thereof may also be used. In addition, it is possible to apply not only a rigid substrate such as a glass substrate but also a flexible substrate.

In addition, in the above embodiments, a Ta film was used as the anti-oxidizing layer 3, other inorganic substances may also be used. Further, a smoothing layer may be formed on the anti-oxidizing layer. Still further, it is possible to form an anti-oxidizing layer between the substrate 1 and the magnetic recording layer 2.

### Example 8

Figure 22 shows the constitution of the magnetic recording medium according to the second aspect of the present invention. As shown in Fig. 22, the perpendicular magnetic recording medium is made by laminating a first magnetic layer (magnetic recording layer) 5, a second magnetic layer (magnetic recording layer) 6 and a protective layer 7 in order on a substrate 4. A glass substrate (manufactured by Corning: #7622) was used as substrate 1 and, the first magnetic layer 5, the second magnetic layer 6 and the protective layer 7 were formed in order in the same vacuum.

Here, a PrTbCo alloy film was used as the first magnetic layer 5, a CoCrPt alloy film was used as the second magnetic layer 6 and a C film was used as the protective layer 7. The compositions for the PrTbCo alloy film and the CoCrPt alloy film were Pr₇Tb₁₀Co₈₃ and Co₇₂Cr₁₀Pt₁₈, respectively. Each of the films was formed by using a composite target where a Pr pellet and a Tb pellet, or a Cr pellet and a Pt pellet, were disposed on a Co target. Additionally, the compositions of the respective alloys are not limited within the above compositions.

Next, the method and the conditions for making the PrTbCo alloy film, the CoCrPt alloy film and the C film will be explained.

All films were made by a DC magnetron sputtering method under the following conditions: Ar gas pressure = 5 mTorr; Power = 620 mW/cm² for the PrTbCo alloy film and the CoCrPt alloy film, and Power = 86 mW/cm² the C film. When the CoCrPt alloy film was made, a -50 V DC bias voltage was applied in order to control the crystal grain size and the magnetic anisotropy.

In addition, for comparison, a perpendicular magnetic recording medium without the CoCrPt alloy film (the magnetic layer 6), that is, the medium wherein the first magnetic layer 5 and the protective layer 7 were formed on the substrate 4, was also formed under the same conditions as in the above case.

Here, in the magnetic recording medium of the PrTbCo monolayer, the thickness of the PrTbCo alloy film was 500 Å, in the magnetic recording medium of the PrTbCo/CoCrPt multilayer, the thicknesses for the PrTbCo alloy film and the CoCrPt alloy film were 400 Å and 100 Å, respectively. In addition, for both magnetic recording media, the thicknesses for the C film were 20, 50, 100 and 200 Å.

Since the PrTbCo monolayer film and the PrTbCo/CoCrPt multilayer film obtained by the above procedure are amorphous, it is impossible to assess the activation volume V by using a crystal grain size as a conventional method in order to determine the index KuV/kT for thermal stability. Therefore, the thermal stability was assessed by using a fluctuation field Hf calculated from the dependency of the remanence coercive force on time for applying the magnetic field. This is described in "*Magnetic Viscosity and Noise Properties for CoCrTa and CoCrPt Thin Film Media*, Kazusuke Yamanaka et al., Shingaku Gihou MR95-13 1995-06". In contrast with the case of the thermal stability index KuV/kT, the lower fluctuation field Hf shows the better thermal stability. According to this method, it is advantageous that Hf can be determined directly by measurement of macromagnetic properties without measuring micro properties such as a crystal grain size.

First, for the magnetic recording medium of the PrTbCo monolayer film and the magnetic recording medium of the PrTbCo/CoCrPt multilayer film, the saturation magnetization Ms, the coercive force Hc, the perpendicular magnetic anisotropy energy K⊥, and the fluctuation field Hf are shown in Table 5. Additionally, for comparison, the properties for a conventional CoCrPt monolayer film are also shown in the table.

**Table 5**

| Sample | Ms (emu/cc) | Hc (Oe) | K⊥ (erg/cc) | Hf (Oe) |
|---|---|---|---|---|
| PrTbCo | 300 | 3200 | 1.0E+07 | 10.2 |
| PrTbCo/CoCrPt | 320 | 3000 | 8.8E+06 | 13.8 |
| CoCrPt | 400 | 3000 | 3.3E+06 | 35.2 |

Table 5 shows that since the magnetic recording medium of the PrTbCo monolayer film shows a very high perpendicular magnetic anisotropy energy K⊥ of 1 x 10⁷ and a low fluctuation field Hf, the monolayer film is suite for high density recording. The same thing can be said for the magnetic recording medium of the PrTbCo/CoCrPt multilayer and, therefore, it is considered that the deterioration in the magnetic properties by lamination of the PrTbCo film and the CoCrPt film is small.

Further, on the basis of the above measurement results, the values of KuV/kT were obtained by using the activation volume V (= kT/HfMs) calculated from the measured value for the fluctuation field, and the measured value of the magnetic anisotropy energy Ku, as in the case of the conventional crystalline medium. The obtained values were greater than 3000 for the magnetic recording medium of the PrTbCo monolayer, and about 2000 for the magnetic recording medium of the PrTbCo/CoCrPt multilayer, which were very high in comparison with the value for the conventional crystalline medium (CoCrPt: 40-60). This demonstrates that the magnetic recording media of the PrTbCo monolayer, and the PrTbCo/CoCrPt multilayer were very excellent in thermal stability.

Next, for the magnetic recording media of the PrTbCo/CoCrPt multilayer and the PrTbCo monolayer, the dependencies of the corrosion resistivity on the protective film thickness are shown in Fig. 6. The examination of corrosion resistivity was carried out by soaking each of the thin films in a one-normality brine for 20 minutes, then aging them for 3 hours in 85°/85 %RH (relative humidity), and by observing pitting corrosion with an optical microscope. Additionally, for comparison, the properties for the conventional magnetic recording medium of the CoCrPt film are also shown in the table.

**Table 6**

| C film Thick-ness (Å) | 20 | 50 | 100 | 200 |
|---|---|---|---|---|
| PrTbCo | many pittings | many pittings | few pittings | few pittings |
| PrTbCo/CoCrPt | few pittings | few pittings | no pittings | no pittings |
| CoCrPt | few pittings | few pittings | no pittings | no pittings |

Table 6 shows that in the case of the magnetic recording medium of the PrTbCo monolayer, a number of pittings were observed at any thickness of the C film (20, 50, 100 and 200 Å), specially, pitting corrosion progressed furthest at 50 Å or thinner as compared with others. On the other hand, in the case of the magnetic recording medium of the PrTbCo/CoCrPt multilayer, few pittings were observed when the C film thickness was 100 Å or thicker. Moreover, even when the thickness was 50 Å or thinner, the number and the size of the observed pittings were much smaller than those in the case of the PrTbCo monolayer film. In addition, in the case of the conventional magnetic recording medium of the CoCrPr film, few pittings were observed when the thickness of the C film was 100 Å or thicker.

From the above results, it is found that by inserting a Co system perpendicular magnetic layer between a PrTbCo amorphous alloy film and a C protective layer, the thickness of the C film can be reduced without deteriorating the corrosion resistivity in comparison with the case of the PrTbCo monolayer. Thus, according to the present invention, a perpendicular recording medium can be made, which is more excellent in thermal stability than conventional magnetic recording media.

### Example 9

In Example 9, unlike Example 8, a FePt alloy film was used as second magnetic layer 3, wherein the composition was Fe₅₀Pt₅₀, and which was made by using a composite target where a Pt pellet was disposed on a Fe target. Additionally, since other conditions were similar to those of Example 8, details are omitted.

For the magnetic recording medium of the PrTbCo monolayer film and the magnetic recording medium of the PrTbCo/FePt multilayer film, the saturation magnetization Ms, the coercive force Hc, the perpendicular magnetic anisotropy energy K⊥, and the fluctuation field Hf are shown in Table 7. Additionally, for comparison, the properties for a conventional CoCrPt monolayer film are also shown in the table.

**Table 7**

| Sample | Ms (emu/cc) | Hc (Oe) | K⊥ (erg/cc) | Hf (Oe) |
|---|---|---|---|---|
| PrTbCo | 300 | 3200 | 1.0E+07 | 10.2 |
| PrTbCo/FePt | 400 | 3000 | 1.1E+07 | 12.2 |
| FePt | 800 | 2800 | 1.0E+07 | 27.5 |

Table 7 shows that in a multilayer film wherein a FePt alloy film was inserted between a PrTbCo alloy film and a protective film, the deterioration in the magnetic properties by lamination of the FePt alloy film is small, as in Example 8.

In addition, the KuV/kT value was about 2500, which was very high, demonstrating that the PrTbCo/FePt multilayer film is very excellent in thermal stability.

Next, for the magnetic recording media of the PrTbCo/FePt multilayer and the PrTbCo monolayer, the dependencies of the corrosion resistivity on the protective film thickness are shown in Fig. 8. The examination of corrosion resistivity was carried out as described in Example 8. Additionally, for comparison, the properties for the conventional magnetic recording medium of the CoCrPt film are also shown in the table.

**Table 8**

| C film Thick-ness (Å) | 20 | 50 | 100 | 200 |
|---|---|---|---|---|
| PrTbCo | many pittings | many pittings | few pittings | few pittings |
| PrTbCo/FePt | few pittings | few pittings | no pittings | no pittings |
| CoCrPt | few pittings | few pittings | no pittings | no pittings |

Table 8 shows that in the case of the magnetic recording medium of the PrTbCo monolayer, a number of pittings were observed at any thickness of the C film (20, 50, 100 and 200 Å), specially, pitting corrosion progressed furthest at 50 Å or thinner in comparing with others. On the other hand, in the case of the magnetic recording medium of the PrTbCo/FePt multilayer, few pittings were observed when the C film thickness was 100 Å or thicker. Moreover, even when the thickness was 50 Å or thinner, the number and the size of the observed pittings were much smaller than those in the case of the PrTbCo monolayer film. In addition, in the case of the conventional magnetic recording medium of the CoCrPr film, few pittings were observed when the thickness of the C film was 100 Å or thicker.

From the above results, it is found that by inserting a FePt system perpendicular magnetic layer between a PrTbCo amorphous alloy film and a C protective layer, the thickness of the C film can be reduced without deteriorating the corrosion resistivity in comparison with the case of the PrTbCo monolayer. Thus, according to the present invention, a perpendicular recording medium can be made, which is more excellent in thermal stability than conventional magnetic recording media.

The present invention is characterized in that the thickness of a C protective film is rendered thinner without deteriorating the corrosion resistivity by using a rare earth-transition metal amorphous film, which is considered to be more excellent in thermal stability than conventional media, for a magnetic recording medium, and by inserting a conventional Co system or FePt system perpendicular magnetization film between the amorphous film and the protective film.

Substances for the rare earth-transition metal amorphous film have been disclosed in JP-A 1999/181040, JP-A 1999/181041, and JP-A 1999/264961. Therefore, the first magnetic layer is not limited to the above PrTbCo alloy film, but other light rare earth metals than Pr (e.g., Ce, Nd, Sm), other heavy rare earth metals than Tb (e.g., Gd, Ho, Er, Dy) and other 3d transition metals than Co (Fe) may be used, and a similar effect can be obtained.

In addition, the second magnetic layer is not limited to the CoCrPt alloy film and FePt alloy film described in Examples 8 and 9, a similar effect can be obtained by using a conventional perpendicular magnetization film of Co system or FePt system, comprising Co or FePt as a main component, respectively.

Further, a C film was used as a protective layer 7 in Examples 8 and 9, it is obvious that other inorganic substances such as Ta and alumina can be applied.

Still further, a smoothing layer may be formed on the protective layer. In addition, an anti-oxidizing layer may be inserted between a substrate and a first magnetic layer.

Further, in Examples 8 and 9, a glass substrate was used as a substrate 4, other substrates made of aluminium alloy, ceramics, plastic and the like, or surface-treated substrates thereof may also be used. In addition, it is possible to apply not only a rigid substrate such as a glass substrate but also a flexible substrate.

Further, in the magnetic recording medium, a third magnetic layer may be formed between the substrate and the magnetic recording layer so that the first and the second magnetic layer are put between the magnetic head and the third magnetic layer. Additionally, in the third magnetic layer, a Fe film, a Co film, a Ni-Fe alloy film, Fe-Al-Si alloy film, Co-Zr-Nb film and the like may be used.

In the construction, sharp recording in the vertical direction can be done even when a ring magnetic head is used. In addition, when a single magnetic pole head is used, the third magnetic layer plays a role as a second magnetic pole and, simultaneously, forms a magnetic path looping magnetic flux. Therefore, in the case where a single magnetic pole head is used, since magnetic filed leakage in the truck direction is little, a track pitch can be narrowed to improve the recording density.

As described above, according to the present invention, a magnetic recording medium, in which the effect of thermal fluctuation is small, and which has a high recording density, a high saturation magnetization, a high coercive force, and high perpendicular magnetic anisotropy can be provided.

Specifically, since the thermal fluctuation effect is small, a time decay of the recorded magnetization is small, and the record is conserved for long time. Further, since the magnetic recording layer is amorphous, no crystal grains exist in a magnetization region, and since there is no magnetization fluctuation resulting in the exchange interaction between the crystal grains, the medium noise can be reduced. Further, since the rectangular ratio is almost 1, the residual magnetization is high, and high reproduction output can be obtained.

That is, the present invention allows a rare earth metal amorphous film to be used as a perpendicular magnetic recording medium without deteriorating its corrosion resistivity, and the present invention can provide a perpendicular magnetic recording medium which is more stable against thermal fluctuation and can heighten the density as compared with the conventional crystalline magnetic recording medium.

## Claims

1. A magnetic recording medium comprising at least a magnetic recording layer formed on a substrate, wherein the magnetic recording layer has perpendicular magnetic anisotropy and comprises an amorphous alloy metal comprising a light rare earth metal, a heavy rare earth metal and a 3d transition metal.

2. The magnetic recording medium according to Claim 1, wherein the magnetic recording layer comprises a PrTbCo alloy.

3. The magnetic recording medium according to Claim 2, wherein the composition of the PrTbCo alloy satisfies the following formula:
(Pr₍₁₀₀₋ₓ₎Tbₓ)_{(100-y)}Co_{y}
40 ≤ x ≤ 80; 77 ≤ y ≤ 85.

4. The magnetic recording medium according to Claim 1, wherein the magnetic recording layer comprises a PrTbFe alloy.

5. The magnetic recording medium according to Claim 4, wherein the composition of the PrTbFe alloy satisfies the following formula:
(Pr₍₁₀₀₋ₓ₎Tbₓ)_{(100-y)}Fe_{y}
50 ≤ x ≤ 80; 70 ≤ y ≤ 90.

6. The magnetic recording medium according to Claim 1, wherein the magnetic recording layer comprises a PrTbFeCo alloy.

7. The magnetic recording medium according to any one of Claims 1 to 6, wherein a soft magnetic layer is formed between the substrate and the magnetic recording layer.

8. A magnetic recording medium comprising a magnetic layer and a protective layer are laminated in order on a substrate, wherein the magnetic layer comprises a first magnetic layer and a second magnetic layer from the substrate side, and wherein the first magnetic layer has perpendicular magnetic anisotropy, and is an amorphous alloy comprising a light rare earth metal, a heavy rare earth metal and a 3d transition metal.

9. The magnetic recording medium according to Claim 8, wherein the second magnetic layer is a perpendicular magnetization layer comprising Co or Fe.
